# EUROPEAN PATENT APPLICATION

(11) **EP 3 854 843 A1**
(43) Date of publication of application: **28.07.2021**
(21) Application number: 19863172.3
(22) Date of filing: 09.08.2019
(51) Int. Cl.: C08L 15/00, B60C 1/00, C08C 19/26, C08K 3/013, C08L 7/00

(54) **RUBBER COMPOSITION AND TIRE**

(30) Priority: 20.09.2018 JP 2018176252; 10.04.2019 JP 2019075022
(71) Applicant: BRIDGESTONE CORPORATION, Chuo-ku Tokyo 104-8340 (JP)
(72) Inventor: TANAKA, Takatsugu, Tokyo 104-8340 (JP)
(74) Representative: Oxley, Robin John George
(86) International application number: PCT/JP2019/031666
(87) International publication number: WO 2020/059367

(57) **Abstract**

Provided are a rubber composition and a tire having excellent durability (crack resistance) and wear resistance while maintaining low-loss property at high level. A rubber composition comprises a modified conjugated diene-based polymer; and a natural rubber, wherein the modified conjugated diene-based polymer has two or more modifying groups per one molecule, modifying groups intermolecularly form a noncovalent bond, and energy per the noncovalent bond is 10 kJ/mol to 200 kJ/mol. A tire comprises the rubber composition.

## Description

### CROSS REFERENCE TO RELATED APPLICATION

This application claims priority to Japanese Patent Application No. 2018-176252 filed on September 20, 2018 and Japanese Patent Application No. 2019-075022 filed on April 10, 2019, the disclosures of which are incorporated herein by reference.

### TECHNICAL FIELD

The present disclosure relates to a rubber composition and a tire.

### BACKGROUND

Demand to improve the fuel efficiency of automobiles has become more stringent in recent years. To meet such demand, regarding tire performance, reduction in rolling resistance is required. The most commonly employed method to reduce the rolling resistance of tires is the use of a material having lower heat generating property (better low-loss property) as a rubber composition.

Examples of such a method disclosed include a method of using carbon black as a filler and modifying a polymerization active terminal by a tin compound (for example, see JP S60-255838 A (PTL 1)), and a method of using carbon black and introducing an amino group into a polymerization active terminal (for example, see JP S62-207342 A (PTL 2)).

### CITATION LIST

### Patent Literature

PTL 1: JP S60-255838 A
PTL 2: JP S62-207342 A

### SUMMARY

### (Technical Problem)

In polymeric materials, however, the lower hysteresis loss, the more energy is typically used for breaking, so that the strength (durability) decreases.

There is also demand to improve the wear resistance of rubber articles such as tires using rubber compositions.

It could therefore be helpful to provide a rubber composition having excellent durability (crack resistance) and wear resistance while maintaining low-loss property at high level. It could also be helpful to provide a tire having excellent durability (crack resistance) and wear resistance while maintaining low-loss property at high level.

### (Solution to Problem)

A rubber composition according to the present disclosure is a rubber composition comprising a modified conjugated diene-based polymer; and a natural rubber, wherein the modified conjugated diene-based polymer has two or more modifying groups per one molecule, modifying groups intermolecularly form a noncovalent bond, and energy per the noncovalent bond is 10 kJ/mol to 200 kJ/mol.

The rubber composition according to the present disclosure has excellent durability (crack resistance) and wear resistance while maintaining low-loss property at high level.

A tire according to the present disclosure is a tire comprising the rubber composition described above.

The tire according to the present disclosure has excellent durability (crack resistance) and wear resistance while maintaining low-loss property at high level.

### (Advantageous Effect)

It is therefore possible to provide a rubber composition having excellent durability (crack resistance) and wear resistance while maintaining low-loss property at high level. It is also possible to provide a tire having excellent durability (crack resistance) and wear resistance while maintaining low-loss property at high level.

### DETAILED DESCRIPTION

Embodiments of the present disclosure will be described below. The following description is intended for illustrative purposes only, and is not intended to limit the scope of the present disclosure in any way.

In the present disclosure, two or more embodiments may be freely combined.

Herein, the term "conjugated diene unit" denotes a conjugated diene compound-derived unit in a modified conjugated diene-based polymer. Herein, the term "conjugated diene compound" denotes a conjugated-system diene compound.

In the present disclosure, the dissociation energy of one pair of noncovalent bonds from modifying groups in a modified conjugated diene-based polymer is calculated using Gaussian09 as a quantum chemistry calculation program, with M06/6-31G(d,p) as a basis function. The bond energy is calculated as follows: First, extraction of monomer units, which construct the noncovalent bonds, followed by construction of a model of a coordination state for calculation of the energy of the coordination state. Next, the coordination state is sufficiently dissolved, and the energy of the dissociation state is calculated. From the difference between the energy of the coordination state and the energy of the dissociation state, the bond energy per one molecule is determined, which is then divided by the number of coordinate bonds to yield the bond energy per one bond.

In the present disclosure, the weight-average molecular weight (Mw) is measured as follows: A calibration curve is created from monodisperse polystyrene by gel permeation chromatography (GPC: "HLC-8020" made by Tosoh Corporation, column: "GMH-XL" made by Tosoh Corporation (two in series), detector: differential refractometer (RI)), and the polystyrene-equivalent weight-average molecular weight (Mw) of each modified conjugated diene-based polymer is determined. An aliquot of polymer cement is taken out of a polymerization bottle, and polymerization reaction is stopped using deaerated isopropanol. The Mw of the solution diluted with THF is then measured to obtain the polystyrene-equivalent weight-average molecular weight of the modified conjugated diene-based copolymer.

### (Rubber composition)

A rubber composition according to the present disclosure comprises a modified conjugated diene-based polymer and a natural rubber, wherein the modified conjugated diene-based polymer has two or more modifying groups per one molecule, modifying groups intermolecularly form a noncovalent bond, and energy per the noncovalent bond is 10 kJ/mol to 200 kJ/mol.

The rubber composition according to the present disclosure has excellent durability (crack resistance) and wear resistance while maintaining low-loss property at high level.

The modified conjugated diene-based polymer and the natural rubber, which are essential components of the rubber composition according to the present disclosure, and optional components of the rubber composition will be described below.

### <Modified conjugated diene-based polymer>

The rubber composition according to the present disclosure contains the modified conjugated diene-based polymer as a rubber component. The modified conjugated diene-based polymer is a modified conjugated diene-based polymer that has two or more modifying groups per one molecule and in which modifying groups intermolecularly form a noncovalent bond and energy per the noncovalent bond is 10 kJ/mol to 200 kJ/mol.

The modified conjugated diene-based polymer in the rubber composition according to the present disclosure has excellent low-loss property and durability. Without wishing to be bound by theory, the reason for this is presumed as follows: As a result of modifying groups intermolecularly forming a noncovalent bond with weak bond energy in the foregoing specific range, in a crosslinked product of the rubber composition, the noncovalent bond is maintained to achieve excellent low-loss property at low strain, whereas the noncovalent bond is cut and loss occurs to achieve excellent durability at high strain.

In the modified conjugated diene-based polymer, the energy per the noncovalent bond is preferably 50 kJ/mol to 200 kJ/mol from the viewpoint of excellent low-loss property and durability.

In one embodiment, in the modified conjugated diene-based polymer, the energy per the noncovalent bond is 10 kJ/mol or more, 20 kJ/mol or more, 30 kJ/mol or more, 40 kJ/mol or more, 50 kJ/mol or more, 60 kJ/mol or more, 70 kJ/mol or more, 80 kJ/mol or more, 90 kJ/mol or more, 100 kJ/mol or more, 110 kJ/mol or more, 120 kJ/mol or more, 130 kJ/mol or more, 140 kJ/mol or more, 150 kJ/mol or more, 160 kJ/mol or more, 170 kJ/mol or more, 180 kJ/mol or more, 190 kJ/mol or more, or 195 kJ/mol or more. In another embodiment, in the modified conjugated diene-based polymer, the energy per the noncovalent bond is 200 kJ/mol or less, 195 kJ/mol or less, 190 kJ/mol or less, 180 kJ/mol or less, 170 kJ/mol or less, 160 kJ/mol or less, 150 kJ/mol or less, 140 kJ/mol or less, 130 kJ/mol or less, 120 kJ/mol or less, 110 kJ/mol or less, 100 kJ/mol or less, 90 kJ/mol or less, 80 kJ/mol or less, 70 kJ/mol or less, 60 kJ/mol or less, 50 kJ/mol or less, 40 kJ/mol or less, 30 kJ/mol or less, or 20 kJ/mol or less.

The base polymer of the modified conjugated diene-based polymer, i.e. the conjugated diene-based polymer before modification, is a polymer that contains at least a conjugated diene unit. Examples of the base polymer include a polymer consisting only of the conjugated diene unit, and a copolymer containing at least the conjugated diene unit and an aromatic vinyl unit.

Examples of a conjugated diene compound forming the conjugated diene unit include butadiene (1,3-butadiene), isoprene, 1,3-pentadiene, and 2,3-dimethylbutadiene. The conjugated diene compound may be substituted or unsubstituted. In one embodiment, the conjugated diene compound has a carbon number of 4 to 8. As the conjugated diene compound, butadiene and isoprene are preferable from the viewpoint of availability.

In one embodiment, the conjugated diene compound is one or more selected from the group consisting of 1,3-butadiene and isoprene. In another embodiment, the conjugated diene compound is 1,3-butadiene.

The content of the conjugated diene unit in the modified conjugated diene-based polymer is not limited, and is, for example, 20 mol% or more, 30 mol% or more, 40 mol% or more, 50 mol% or more, 60 mol% or more, 70 mol% or more, 80 mol% or more, 90 mol% or more, or 95 mol% or more, and 100 mol% or less, 95 mol% or less, 90 mol% or less, 80 mol% or less, 70 mol% or less, 60 mol% or less, 50 mol% or less, 40 mol% or less, 30 mol% or less, or 20 mol% or less. In one embodiment, the content of the conjugated diene unit in the modified conjugated diene-based polymer is 50 mol% to 100 mol%.

Examples of an aromatic vinyl compound forming the aromatic vinyl unit include styrene, alkylstyrene, and halogenated alkylstyrene. As the aromatic vinyl compound, styrene is preferable from the viewpoint of availability.

Examples of the alkylstyrene include 4-methylstyrene, 3-methylstyrene, and 2,4-dimethylstyrene.

The alkyl group of the halogenated alkylstyrene has, for example, a carbon number of 1 to 5. Examples of the halogen of the halogenated alkylstyrene include fluorine, chlorine, bromine, and iodine. Examples of the halogenated alkylstyrene include 4-chloromethylstyrene and 3-chloromethylstyrene.

In one embodiment, the aromatic vinyl compound is one or more selected from the group consisting of styrene, alkylstyrene, and halogenated alkylstyrene.

In the case where the modified conjugated diene-based polymer contains the aromatic vinyl unit in addition to the conjugated diene unit, the content of the aromatic vinyl unit in the modified conjugated diene-based polymer is not limited, and is, for example, 0.1 mol% or more, 1 mol% or more, 5 mol% or more, 10 mol% or more, 20 mol% or more, 30 mol% or more, or 40 mol% or more, and 40 mol% or less, 30 mol% or less, 20 mol% or less, 10 mol% or less, 5 mol% or less, 1 mol% or less, or 0.1 mol% or less. In one embodiment, the content of the aromatic vinyl unit in the modified conjugated diene-based polymer is 0 mol% to 45 mol%.

One conjugated diene unit may be used alone, or two or more conjugated diene units may be used in combination. One aromatic vinyl unit may be used alone, or two or more aromatic vinyl units may be used in combination.

Examples of the base polymer of the modified conjugated diene-based polymer include a styrene butadiene copolymer, polybutadiene, and synthetic isoprene rubber.

The modifying groups of the modified conjugated diene-based polymer are not limited as long as the modifying groups can form a noncovalent bond and the energy per the noncovalent bond is 10 kJ/mol to 200 kJ/mol. Examples include -COOM and -OM (where M is an alkali metal atom).

Examples of the alkali metal atom (M) include Li, Na, K, Rb, and Cs.

In the rubber composition according to the present disclosure, the modifying groups are preferably one or more selected from the group consisting of -COOM and -OM (where M is an alkali metal atom). Thus, a coordinate bond having appropriate bond energy can be introduced.

In the rubber composition according to the present disclosure, the modifying groups are preferably one or more selected from the group consisting of -COOLi and -OLi. Thus, a coordinate bond having appropriate bond energy can be introduced more easily.

The modified conjugated diene-based polymer has two or more such modifying groups per one molecule. In the case where the number of modifying groups per one molecule is less than 2, low-loss property, durability (crack resistance), and wear resistance are insufficient.

The number of modifying groups per one molecule in the modified conjugated diene-based polymer is 2 or more, preferably 3 or more, and more preferably 5 or more. The number of modifying groups per one molecule is preferably 30 or less, more preferably 15 or less, and further preferably 10 or less, from the viewpoint of handleability.

In one embodiment, the number of modifying groups per one molecule in the modified conjugated diene-based polymer is 2 or more, 3 or more, 4 or more, 5 or more, 6 or more, 7 or more, 8 or more, 9 or more, 9.5 or more, 10 or more, 11 or more, 12 or more, 13 or more, 14 or more, 15 or more, 20 or more, 25 or more, or 30 or more. In another embodiment, the number of modifying groups per one molecule in the modified conjugated diene-based polymer is 30 or less, 25 or less, 20 or less, 19 or less, 18 or less, 17 or less, 16 or less, 15 or less, 14 or less, 13 or less, 12 or less, 11 or less, 10 or less, 9.5 or less, 9 or less, 8 or less, 7 or less, 6 or less, 5 or less, 4 or less, or 3 or less.

The molecular weight of the modified conjugated diene-based polymer is not limited, and may be appropriately adjusted. For example, the weight-average molecular weight (Mw) of the modified conjugated diene-based polymer is 100,000 or more or 150,000 or more, and 1,000,000 or less, 500,000 or less, or 200,000 or less.

In the rubber composition according to the present disclosure, the weight-average molecular weight of the modified conjugated diene-based polymer is preferably 100,000 or more. Thus, both crack resistance and wear resistance can be achieved at high level. The Mw of the modified conjugated diene-based polymer is preferably 150,000 to 250,000, from the viewpoint of crack resistance and wear resistance.

In the rubber composition according to the present disclosure, the modified conjugated diene-based polymer is preferably one or more selected from the group consisting of a modified styrene butadiene copolymer and a modified polybutadiene. Such a rubber composition has better crack resistance and wear resistance while maintaining low-loss property at high level.

One modified conjugated diene-based polymer may be used alone, or two or more modified conjugated diene-based polymers may be used in combination.

The proportion of the modified conjugated diene-based polymer in the rubber component may be appropriately adjusted. For example, the proportion of the mass of the modified conjugated diene-based polymer to the total mass of the modified conjugated diene-based polymer and the natural rubber is 10 mass% or more, 20 mass% or more, 30 mass% or more, 40 mass% or more, 50 mass% or more, or 60 mass% or more, and 90 mass% or less, 80 mass% or less, 70 mass% or less, 60 mass% or less, 50 mass% or less, or 40 mass% or less.

In the rubber composition according to the present disclosure, the proportion of the mass of the modified conjugated diene-based polymer to the total mass of the modified conjugated diene-based polymer and the natural rubber is preferably 20 mass% to 90 mass%. This can further improve crack resistance while maintaining low-loss property at high level.

### <Production method for modified conjugated diene-based polymer>

The production method for the modified conjugated diene-based polymer is not limited. For example, a production method including the following (i), (ii), and (iii) may be suitably used:
(i) anionically polymerizing a conjugated diene compound alone or the conjugated diene compound and an aromatic vinyl compound in the presence of an alkali metal compound as a polymerization initiator to form a conjugated diene-based polymer;
(ii) further adding an alkali metal compound to the conjugated diene-based polymer after (i); and
(iii) reacting a product obtained in (ii) with a modifier to introduce a modifying group into the conjugated diene-based polymer.

The step of (i) anionically polymerizing a conjugated diene compound alone or the conjugated diene compound and an aromatic vinyl compound in the presence of an alkali metal compound as a polymerization initiator to form a conjugated diene-based polymer (hereinafter also simply referred to as "step (i)") can be performed in the same manner as conventionally known anionic polymerization described in, for example, JP 2013-249379 A, JP 2016-003246 A, and JP 2014-227458 A. Examples of the conjugated diene compound and examples of the aromatic vinyl compound are as described above.

Herein, a compound containing at least the conjugated diene compound (optionally containing the below-described aromatic vinyl compound) and used to form a conjugated diene-based polymer in the step (i) is also collectively referred to as "monomer".

In one embodiment, the aromatic vinyl compound preferably contains styrene and one or more selected from the group consisting of alkylstyrene and halogenated alkylstyrene. This makes it easier to introduce the modifying group.

In one embodiment, the total content of the one or more selected from the group consisting of alkylstyrene and halogenated alkylstyrene is preferably 0.1 mass% to 3 mass% with respect to the monomer forming the conjugated diene-based polymer. Thus, excellent low-loss property and durability are achieved while ensuring operability during production.

In one embodiment, the alkylstyrene is preferably 4-methylstyrene, and the halogenated alkylstyrene is preferably 4-chloromethylstyrene. This makes it easier to introduce the modifying group.

The alkali metal compound used as the polymerization initiator may be a known alkali metal compound for anionic polymerization. Examples of the alkali metal atom (M) include Li, Na, K, Rb, and Cs. Examples of the alkali metal compound include an organic alkali metal compound and an organic alkali earth metal compound. The alkali metal compound is preferably an organic alkali metal compound.

Examples of the organic alkali metal compound include a hydrocarbyllithium and a lithium amide compound.

The hydrocarbyllithium preferably has, for example, a hydrocarbyl group having a carbon number of 2 to 20, and examples include ethyllithium, n-propyllithium, isopropyllithium, n-butyllithium, isobutyllithium, sec-butyllithium, tert-butyllithium, tert-octyllithium, n-decyllithium, phenyllithium, 2-naphthyllithium, 2-butylphenyllithium, 4-phenylbutyllithium, cyclohexyllithium, cyclobentyllithium, and a reaction product of diisopropenylbenzene and butyllithium.

Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, and lithium methylphenethylamide.

The alkali metal compound used in the step (i) is preferably n-butyllithium, from the viewpoint of more efficiently synthesizing the modified conjugated diene-based polymer according to the present disclosure.

The amount of the alkali metal compound used in the step (i) may be appropriately adjusted. For example, the amount of the alkali metal compound may be in a range of 0.2 mmol to 20 mmol with respect to 100 parts by mass of the monomer forming the modified conjugated diene-based polymer.

In the step of (ii) further adding an alkali metal compound to the conjugated diene-based polymer after (i) (hereinafter also simply referred to as "step (ii)"), examples of the alkali metal atom (M) of the alkali metal compound added include Li, Na, K, Rb, and Cs.

For the alkali metal compound added in the step (ii), the same description as the alkali metal compound in the step (i) applies. The alkali metal compound in the step (i) and the alkali metal compound in the step (ii) may be the same or different.

The alkali metal compound used in the step (ii) is preferably sec-butyllithium, from the viewpoint of more efficiently synthesizing the modified conjugated diene-based polymer according to the present disclosure.

Preferably, the alkali metal compound used in the step (i) is n-butyllithium and the alkali metal compound used in the step (ii) is sec-butyllithium, from the viewpoint of more efficiently synthesizing the modified conjugated diene-based polymer according to the present disclosure.

By further adding the alkali metal compound separately in the step (ii) after the step (i), the alkali metal atom is introduced into a portion other than one terminal of the polymer main chain (e.g. a part between the terminals of the polymer main chain) of the conjugated diene-based polymer formed in the step (i) (i.e. a hydrogen atom of the hydrocarbon chain is replaced with the alkali metal atom), and the introduced alkali metal atom reacts with the modifier to introduce the modifying group that can form a noncovalent bond intermolecularly. Hence, the number of modifying groups per one molecule in the modified conjugated diene-based polymer can be 2 or more.

In the case where the step (ii) is not performed in the production method including the steps (i), (ii), and (iii), typically, alkali metal is introduced into only a polymerization active terminal of the conjugated diene-based polymer and the modifying group is introduced into only the terminal. Therefore, in the case where the step (ii) is not performed, the number of modifying groups per one molecule in the modified conjugated diene-based polymer is 1.

As an example, in the case where styrene is used as the aromatic vinyl compound, the portion into which the alkali metal atom is introduced in the step (ii) is a tertiary carbon atom of the bonding portion of the styrene with the polymer main chain. As another example, in the case where styrene and 4-methylstyrene are used as the aromatic vinyl compound, the alkali metal atom is introduced into a tertiary carbon atom of the bonding portion of the 4-methylstyrene with the polymer main chain and a primary carbon atom of the 4-position methyl group, in addition to a tertiary carbon atom of the bonding portion of the styrene with the polymer main chain. In this case, it is considered that, because steric hindrance is smaller in the primary carbon atom than in the tertiary carbon atom, the alkali metal atom is preferentially introduced into the primary carbon atom. It is also considered that, in a polymer system containing no aromatic vinyl compound, although the activity is less than in the case of the aromatic vinyl compound, an allyl-position hydrogen atom reacts with the alkali metal atom of the additionally added alkali metal compound to introduce the alkali metal atom.

The amount of the alkali metal compound added in the step (ii) may be appropriately adjusted. For example, the amount of the alkali metal compound added in the step (ii) may be in a range of 0.2 mmol to 20 mmol with respect to 100 parts by mass of the monomer forming the modified conjugated diene-based polymer.

The ratio ((ii)/(i)) between the amount (mmol) of the alkali metal compound added in the step (i) and the amount (mmol) of the alkali metal compound added in the step (ii) is preferably 0.5 to 100, and more preferably 0.9 to 20.

In the case where the aromatic vinyl compound contains styrene and one or more selected from the group consisting of alkylstyrene and halogenated alkylstyrene, the amount of the alkali metal compound added in the step (ii) is for example in a range of 0.1 mmol to 3 mmol and preferably in a range of 0.1 mmol to 1 mmol with respect to 100 parts by mass of the monomer forming the modified conjugated diene-based polymer. Thus, excellent low-loss property and durability are achieved while ensuring operability.

In the case of using the production method including the steps (i), (ii), and (iii), the number of modifying groups per one molecule in the modified conjugated diene-based polymer is calculated according to the following expression:
(the amount of substance (mmol) of the alkali metal compound added in the step (ii))/((the charge-in amount (g) of the monomer forming the modified conjugated diene-based polymer)/(the number-average molecular weight Mn of the modified conjugated diene-based polymer)).

In the production method including the steps (i), (ii), and (iii), the method of setting the number of modifying groups per one molecule in the modified conjugated diene-based polymer to 2 or more includes, for example, increasing the amount of the alkali metal added in the step (ii) and/or increasing the amount of the aromatic vinyl compound as a monomer.

In the step of (iii) reacting a product obtained in (ii) with a modifier to introduce a modifying group into the conjugated diene-based polymer (hereinafter also simply referred to as "step (iii)"), examples of the modifier used include carbon dioxide gas (carbon dioxide) and carbon disulfide.

The modifier is preferably carbon dioxide gas. This eases introduction of a polar group into a nonpolar polymer.

The amount of the modifier is not limited, and may be appropriately adjusted. For example, in the case where carbon dioxide gas is used as the modifier, carbon dioxide gas is blown into the solution containing the product of the step (ii) until the color of the solution disappears.

For example, in the case where carbon dioxide gas is used as the modifier, the modifying group is -COOM. For example, in the case where an aldehyde such as acetaldehyde is used as the modifier, the modifying group is -OM.

The following scheme illustrates an example of the steps (i) to (iii) in the case where butadiene is used as the conjugated diene compound, styrene and 4-methylstyrene are used as the aromatic vinyl compound, n-butyllithium is used as the alkali metal compound in the step (i), sec-butyllithium is used as the alkali metal compound in the step (ii), and carbon dioxide gas is used as the modifier in the step (iii). This example illustrates an intermediate product in which only a 4-position methyl portion of the 4-methylstyrene unit of the conjugated diene-based polymer is introduced with a Li atom in the step (ii), for the sake of simplicity. However, a Li atom may also be introduced into the carbon atoms marked with * in the following formula, that is, the tertiary carbon atom of the bonding portion of the styrene with the polymer main chain and the tertiary carbon atom of the bonding portion of the 4-methylstyrene with the polymer main chain.

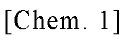

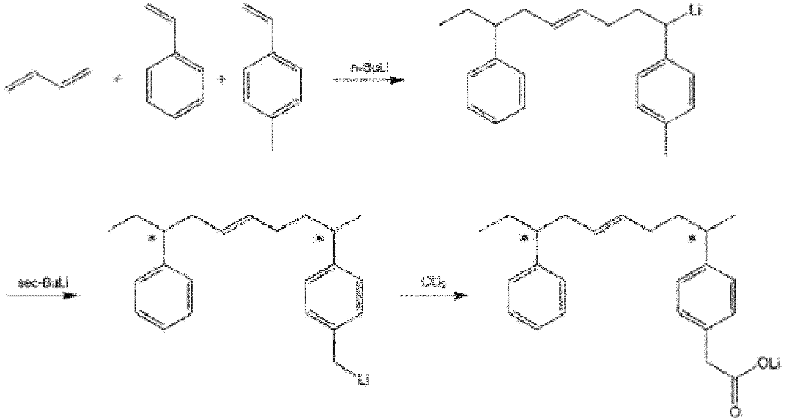

The modified conjugated diene-based polymer obtained in this example has -COOLi as a modifying group, and, for example, the O atom of the carbonyl group in the modifying group coordinates to a Li atom in the modifying group of another modified conjugated diene-based polymer molecule to form a coordinate bond that is a kind of noncovalent bond. Since the Li atom has a coordination number of 4, the O atom of the carbonyl group of the modifying group in two more modified conjugated diene-based polymer molecules can coordinate to the Li atom.

In the foregoing production method, the steps (ii) and (iii) may be performed simultaneously, or the step (iii) may be performed after the step (ii).

The production method may include, for example, a step of cleaning the modified conjugated diene-based polymer obtained in the step (iii), in addition to the steps (i), (ii) and (iii). A solvent used in the cleaning is not limited, and may be appropriately selected depending on the intended use. Examples of the solvent include methanol, ethanol, isopropanol, water, and buffer water.

In the present disclosure, it is preferable not to add an acid to the modified conjugated diene-based polymer. Adding an acid can, for example, cause lithium to be removed from the modified conjugated diene-based polymer and result in not having a coordinate bond.

The conjugated diene-based polymer (base polymer) may be formed using a known production method, instead of the step (i). For example, the conjugated diene-based polymer may be formed using a production method for a multi-component copolymer described in any of JP 2017-101181 A and WO 2015/190072 A1.

### <Natural rubber>

The rubber composition according to the present disclosure contains the natural rubber as a rubber component. As a result of the natural rubber being blended with the modified conjugated diene-based polymer, durability (crack resistance) and wear resistance can be improved while maintaining low-loss property at high level. One natural rubber may be used alone, or two or more natural rubbers may be used in combination.

### <Other rubber components>

The rubber composition according to the present disclosure may or may not contain rubber components other than the above-described modified conjugated diene-based polymer and natural rubber. Such other rubber components may be appropriately selected from known rubber components. Examples of the other rubber components include a synthetic isoprene rubber, a butadiene rubber, a styrene-butadiene rubber, a butyl rubber, a bromide of a copolymer of isobutylene and p-methylstyrene, a halogenated butyl rubber, an acrylonitrile-butadiene rubber, a chloroprene rubber, an ethylene-propylene rubber, an ethylene-propylene-diene rubber, a styrene-isoprene rubber, a styrene-isoprene-butadiene rubber, an isoprene-butadiene rubber, a chlorosulfonated polyethylene, an acrylic rubber, an epichlorohydrin rubber, a polysulfide rubber, a silicone rubber, a fluororubber, and a urethane rubber. These other rubber components may be used alone or in combination of two or more.

### <Other Components>

The rubber composition according to the present disclosure may be appropriately compounded with known additives contained in rubber compositions, besides the foregoing rubber components. Examples of such additives include a filler, a vulcanizing agent (crosslinking agent), a vulcanization accelerator, an age resistor, a reinforcing agent, a softener, a vulcanizing co-agent, a colorant, a flame retardant, a lubricant, a foaming agent, a plasticizer, a processing aid, an antioxidant, an anti-scorch agent, an ultraviolet rays protecting agent, an antistatic agent, a color protecting agent, and oil. These additives may be used alone or in combination of two or more.

The rubber composition according to the present disclosure preferably further contains a filler. This contributes to better low-loss property and durability. Moreover, wet gripping performance is improved.

### <Filler>

Examples of the filler include an inorganic filler and carbon black. These may be used alone or in combination of two or more. Herein, carbon black is not included in inorganic fillers.

Examples of the inorganic filler include silica, aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate.

In the case of using the inorganic filler, the inorganic filler may be appropriately subjected to a surface treatment using, for example, a silane coupling agent.

Examples of the carbon black include those of GPF (General Purpose Furnace), FEF (Fast Extruding Furnace), SRF (Semi-Reinforcing Furnace), HAF (High Abrasion Furnace), SAF (Super Abrasion Furnace), and ISAF (Intermediate SAF) grades.

In the case where the rubber composition according to the present disclosure contains the filler, the content of the filler may be appropriately adjusted. For example, the content of the filler is 5 parts to 200 parts by mass, 10 parts to 200 parts by mass, or 10 parts to 130 parts by mass with respect to 100 parts by mass of the rubber component.

### <Vulcanizing agent (crosslinking agent)>

The vulcanizing agent (crosslinking agent) is not limited, and may be appropriately selected. Examples of the vulcanizing agent include a sulfur-containing vulcanizing agent, an organic peroxide-containing vulcanizing agent, an inorganic vulcanizing agent, a polyamine vulcanizing agent, a resin vulcanizing agent, a sulfur compound-based vulcanizing agent, an oxime-nitrosamine-based vulcanizing agent, and sulfur.

In the case where the rubber composition according to the present disclosure contains the vulcanizing agent, the content of the vulcanizing agent may be appropriately adjusted. For example, the content of the vulcanizing agent is 0.1 parts to 20 parts by mass or 0.1 parts to 10 parts by mass with respect to 100 parts by mass of the rubber component.

### <Vulcanization accelerator>

The vulcanization accelerator is not limited, and may be appropriately selected. Examples of the vulcanization accelerator include a guanidine-based compound, an aldehyde-amine-based compound, an aldehyde-ammonia-based compound, a thiazole-based compound, a sulfenamide-based compound, a thiourea-based compound, a thiuram-based compound, a dithiocarbamate-based compound, and a xanthate-based compound.

In the case where the rubber composition according to the present disclosure contains the vulcanization accelerator, the content of the vulcanization accelerator may be appropriately adjusted. For example, the content of the vulcanization accelerator is 0.1 parts to 20 parts by mass or 0.1 parts to 10 parts by mass with respect to 100 parts by mass of the rubber component.

The method of preparing the rubber composition according to the present disclosure is not limited, and a known method may be used. For example, the rubber composition is obtained by kneading all components including the modified conjugated diene-based polymer and the natural rubber using a kneader such as a Banbury mixer, a roll, or an internal mixer. The rubber composition may be prepared by mixing the components other than the vulcanization accelerator and the vulcanizing agent at a non-production stage and compounding and mixing the vulcanization accelerator and the vulcanizing agent in the mixture at a production stage.

### (Rubber product)

A rubber product obtained using the rubber composition according to the present disclosure is not limited, and examples include a tire, a conveyor belt, an anti-vibration rubber, a seismic isolation rubber, a rubber crawler, a hose, and a foam.

The method of obtaining the rubber product using the rubber composition according to the present disclosure is not limited, and a known method may be used. The conditions for crosslinking or vulcanizing the rubber composition may be appropriately adjusted. For example, the temperature may be 120 °C to 200 °C, and the heating time may be 1 minute to 900 minutes.

### (Tire)

A tire according to the present disclosure comprises the above-described rubber composition. The rubber composition according to the present disclosure may be used in any portion of the tire. Examples of the portion include a tread rubber, a base tread rubber, a sidewall rubber, a side reinforcing rubber, and a bead filler.

The method of producing the tire is not limited, and a known method may be used.

### EXAMPLES

The presently disclosed techniques will be described in more detail below by way of examples, although these examples are intended for illustrative purposes only and are not intended to limit the scope of the present disclosure in any way. In the examples, the blending amounts are in parts by mass, unless otherwise noted.

Details of materials used in the examples are as follows:
- Natural rubber: RSS#3.
- Modified conjugated diene-based polymer: modified SBR, prepared by the below-described method.
- Carbon black: HAF, "N234" made by Tokai Carbon Co., Ltd.
- Oil: "JOMO PROCESS NC300BN" made by JX Nippon Oil & Energy Corporation.
- Wax: product name "SUNTIGHT®" (SUNTIGHT is a registered trademark in Japan, other countries, or both) made by Seiko-Chemical Co., Ltd.
- Age resistor: N-(1,3-dimethylbutyl)-N'-phenyl-p-phenylenediamine, product name "NOCRAC® 6C" (NOCRAC is a registered trademark in Japan, other countries, or both) made by Ouchi Shinko Chemical Industrial Co., Ltd.
- Vulcanization accelerator: N-(cyclohexyl)-2-benzothiazolesulfenamide, product name "NOCCELER® CZ-G" (NOCCELER is a registered trademark in Japan, other countries, or both) made by Ouchi Shinko Chemical Industrial Co., Ltd.

In the examples, the energy per one noncovalent bond between modifying groups in the modified conjugated diene-based polymer was determined by the foregoing method. In the examples, the vinyl content (expressed as Vi in the tables) [%] of the butadiene moiety and the styrene content (expressed as St in the tables) [%] of the polymer were determined from the integral ratio of ¹H-NMR. The weight-average molecular weight of the polymer was determined by the foregoing method.

In the examples, the number of modifying groups in the modified conjugated diene-based polymer was calculated by the foregoing method.

### Preparation of COOLi modified SBR

In the step (i), to a dried bottle was added cyclohexane (240 g), a butadiene/cyclohexane solution (25 mass%, 194 g), a styrene/cyclohexane solution (27 mass%, 46 g), and 4-methylstyrene (480 mg) in an inert atmosphere, and then a 2,2-di-(2-tetrahydrofuryl)propane/cyclohexane solution (1 M, 0.35 mL) and n-butyllithium (1.6 M, 0.42 mL) were added thereto. The glass bottle was gently shaken at 50 °C for one hour to confirm the completion of polymerization .

In the step (ii), to the solution containing the conjugated diene-based polymer obtained in the step (i) was added N,N,N',N'-tetramethylethylenediamine (418 mg) and sec-butyllithium (1.0 M, 4.0 mL), and shaken at 70 °C for two hours.

In the step (iii), carbon dioxide gas was blown into the solution obtained in the step (ii) until the color disappeared, to complete a modification reaction.

Subsequently, 0.5 mL of an isopropanol solution of 2,6-di-t-butyl-p-cresol (BHT) (BHT concentration: 5 mass%) was added to the obtained polymer cement, and then reprecipitation with isopropanol and drying under reduced pressure were performed to obtain a target modified styrene-butadiene copolymer (COOLi modified SBR).

Rubber compositions were produced according to the formulations listed in Tables 1 and 2, using a typical Banbury mixer. For each rubber composition, the tensile stress at 100 % elongation (expressed as "100 % stress" in Table 2) was measured in accordance with JIS K 6251 as follows. Moreover, for a rubber vulcanizate obtained by vulcanizing each rubber composition at 160 °C for 20 minutes, the low-loss property, the crack growth resistance, and the wear resistance were evaluated as follows. The results are listed in Table 2.

**[Table 1]**

| Component | Blending amount |
|---|---|
| NR | Type and amount shown in Table 2 |
| Modified SBR | |
| Carbon black | 50 |
| Oil | 10 |
| Age resistor | 1 |
| Wax | 1 |
| Vulcanization accelerator | 1.5 |
| Sulfur | 1.5 |

**[Table 2]**

| | | Comparative Example 1 | Example 1 | Example 2 | Comparative Example 2 |
|---|---|---|---|---|---|
| NR | Blending amount | 100 | 80 | 60 | 0 |
| Modified SBR | Blending amount | 0 | 20 | 40 | 100 |
| | Number of modifying groups per one polymer molecule | 0 | 9.5 | 9.5 | 9.5 |
| | Modifying group type | - | -COOLi | -COOLi | -COOLi |
| | Energy of noncovalent bond between modifying groups [kJ/mol] | - | 195 | 195 | 195 |
| | Mn×10³ | - | 158 | 158 | 158 |
| | Mw×10³ | - | 180 | 180 | 180 |
| | Mn/Mw | - | 1.14 | 1.14 | 1.14 |
| | St [%] | - | 21 | 21 | 21 |
| | Vi[%] | - | 60 | 60 | 60 |
| Properties | 100% stress [MPa] | 2.2 | 3.2 | 3.9 | 6.4 |
| | Low-loss property | 100 | 100 | 102 | 113 |
| | Crack resistance | 100 | 361 | 265 | 5 |
| | Wear resistance | 100 | 144 | 109 | 158 |

### <Tensile stress at 100 % elongation>

For each rubber composition, a JIS dumbbell No. 3 test piece was produced in accordance with JIS K 6251, and the tensile stress (MPa) at 100 % elongation was measured at a test temperature of 24 ± 4 °C.

### <Low-loss property>

The loss tangent (tanδ) was measured at a temperature of 50 °C, a frequency of 15 Hz, and a strain of 10 % using a viscoelasticity meter made by TA Instruments. Taking the reciprocal of the value of tanδ, the result is expressed as an index where the value of Comparative Example 1 is set to 100. A larger index indicates better low-loss property.

### <Crack resistance>

A 0.5 mm crack was made at the center of a JIS No. 3 test piece, and the test piece was repeatedly subjected to fatigue with fixed strain of 40 % to 150 % at room temperature. The number of times until the sample was cut was measured. The result is expressed as an index where the value of Comparative Example 1 is set to 100. A larger index indicates better crack resistance (durability).

### <Wear resistance>

For each rubber vulcanizate, the abrasion loss at a slip rate of 25 % was measured at room temperature using a Lambourn abrasion tester. The result is expressed as an index where the reciprocal of the abrasion loss of the rubber vulcanizate of Comparative Example 1 is set to 100. A larger index indicates less abrasion loss and better wear resistance.

As can be seen from Table 2, Examples had excellent durability (crack resistance) and wear resistance while maintaining low-loss property at high level. The stress of Examples also improved. Even in the case where the rubber had high stress, the durability (crack resistance) was improved. By reducing the stress, the durability can be further improved.

### INDUSTRIAL APPLICABILITY

It is therefore possible to provide a rubber composition having excellent durability (crack resistance) and wear resistance while maintaining low-loss property at high level. It is also possible to provide a tire having excellent durability (crack resistance) and wear resistance while maintaining low-loss property at high level.

## Claims

1. A rubber composition comprising:
a modified conjugated diene-based polymer; and
a natural rubber,
wherein the modified conjugated diene-based polymer has two or more modifying groups per one molecule, modifying groups intermolecularly form a noncovalent bond, and its energy per the noncovalent bond is 10 kJ/mol to 200 kJ/mol.

2. The rubber composition according to claim 1, wherein a proportion of a mass of the modified conjugated diene-based polymer to a total mass of the modified conjugated diene-based polymer and the natural rubber is 20 mass% to 90 mass%.

3. The rubber composition according to claim 1 or 2, wherein the modifying groups are one or more selected from the group consisting of -COOM and -OM, where M is an alkali metal atom.

4. The rubber composition according to any one of claims 1 to 3, wherein the modifying groups are one or more selected from the group consisting of -COOLi and -OLi.

5. The rubber composition according to any one of claims 1 to 4, wherein the modified conjugated diene-based polymer is one or more selected from the group consisting of a modified styrene butadiene copolymer and a modified polybutadiene.

6. The rubber composition according to any one of claims 1 to 5, wherein a weight-average molecular weight of the modified conjugated diene-based polymer is 100,000 or more.

7. The rubber composition according to any one of claims 1 to 6, further comprising a filler.

8. A tire comprising the rubber composition according to any one of claims 1 to 7.
